# EUROPEAN PATENT APPLICATION

(11) **EP 3 646 939 A1**
(43) Date of publication of application: **06.05.2020**
(21) Application number: 18823831.5
(22) Date of filing: 25.06.2018
(51) Int. Cl.: B01D 59/26, B01D 59/28

(54) **METHOD FOR PRODUCING DEUTERIUM-DEPLETED WATER AND METHOD FOR PRODUCING DEUTERIUM-CONCENTRATED WATER**

(30) Priority: 30.06.2017 JP 2017128256
(71) Applicant: Shinshu University, Matsumoto-shi, Nagano 390-8621 (JP); Kotobuki Tsushou Co., Ltd., Kitakyushu-shi, Fukuoka 8028540 (JP)
(72) Inventor: KANEKO Katsumi, Nagano-shi Nagano 380-8553 (JP); TAKAGI Toshio, Kitakyushu-shi Fukuoka 802-0042 (JP); SHIMIZU Yasushi, Kitakyushu-shi Fukuoka 802-8540 (JP); MURATA Katsuyuki, Kitakyushu-shi Fukuoka 802-8540 (JP); ONO Yuji, Kitakyushu-shi Fukuoka 802-0836 (JP)
(74) Representative: Parker, Andrew James
(86) International application number: PCT/JP2018/023936
(87) International publication number: WO 2019/004102

(57) **Abstract**

According to the present invention, water is separated into deuterium-depleted water and deuterium-concentrated water easily at low cost.

Provided is a method for producing deuterium-depleted water by removing heavy water and semi-heavy water from water, the method including: supplying water vapor for a predetermined time period to an adsorbent material 11 obtained by adding to a carbon material one or more of metals belonging to Group 8 to Group 13 of the Periodic Table of Elements as additive metals and causing the water vapor to adsorb while passing through the adsorbent material 11; subsequently bringing protium gas into contact with the adsorbent material 11; and then desorbing and collecting the water vapor that has adsorbed to the adsorbent material 11.

## Description

### Technical Field

The present invention relates to a method for producing deuterium-depleted water having a reduced amount of heavy water or semi-heavy water from common water.

Furthermore, the present invention relates to a method for producing deuterium-concentrated water including plenty of heavy water or semi-heavy water from common water.

### Background Art

In common water, H₂O (light water) is co-present with D₂O (heavy water) and DHO (semi-heavy water), which are water molecules containing a deuterium atom that is an isotope of hydrogen atom. The concentration of heavy water and semi-heavy water included in water in nature may vary depending on the place of collection; however, the concentration is about 150 ppm in flatlands, and most of the water is semi-heavy water.

The amount of heavy water and semi-heavy water included in the human body is, for example, as minute as 95 ppm of the body weight for an adult having a body weight of 60 kg.

However, since heavy water and semi-heavy water are different from light water in terms of physical properties such as solubility of substances, electrical conductivity, and the degree of ionization, or the reaction rate, and thus cause disorder in vivo when being ingested in a large amount of heavy water and semi-heavy water, and living organisms die out in pure heavy water. Therefore, it is more desirable for human health as the deuterium concentration in drinking water and the like is lower, and thus, verification is underway.

Deuterium-depleted water that hardly contains heavy water or semi-heavy water has not been authorized by the Ministry of Health, Labour, and Welfare in Japan; however, the deuterium-depleted water is approved as an anticancer agent for animals in Hungary and is often drunk by cancer patients and the like.

As a method for producing deuterium-depleted water from common water, in the conventional technique, deuterium-depleted water has been produced by a method of repeating distillation by utilizing very small differences in physical properties between hydrogen and deuterium (Patent Literature 1) or a method by water electrolysis (Patent Literature 2).

However, in the conventional methods for producing deuterium-depleted water, large-sized facilities and repetition of complicated operations are needed, and the production cost is high. Therefore, huge economic burden has been imposed on cancer patients and those who wish to drink deuteriumu-depleted water in expectation of various efficacies.

Furthermore, heavy water can be used for radiation therapy of cancer and the like, as a moderator of radiation. In addition, it is expected to enhance the effect of an anticancer agent by substituting the agent with deuterium using heavy water or semi-heavy water as a raw material.

Therefore, a method capable of efficiently separating light water from heavy water and semi-heavy water is needed.

### Citation List

### Patent Literature

Patent Literature 1: Japanese Unexamined Patent Publication No. 2008-512338
Patent Literature 2: Japanese Unexamined Patent Publication No. 2012-158499

### Summary of Invention

### Technical Problem

The present invention has been achieved in order to solve the above-described problems, and an object thereof is to separate water into deuterium-depleted water and deuterium-concentrated water easily at low cost.

### Solution to Problem

According to the present invention, the means for solving the above problems are as follows.

A first aspect of the invention is a method for producing deuterium-depleted water by removing heavy water and semi-heavy water from water, the method including supplying water vapor for a predetermined time period to an adsorbent material obtained by adding to a carbon material one or more of metals belonging to Group 8 to Group 13 of the Periodic Table of Elements as additive metals and causing the water vapor to adsorb while passing through the adsorbent material; subsequently bringing protium gas into contact with the adsorbent material; and then desorbing and collecting the water vapor that has adsorbed to the adsorbent material.

A second aspect of the invention is a method for producing deuterium-depleted water by removing heavy water and semi-heavy water from water, the method including rotating, in the circumferential direction, an adsorbent material obtained by adding to a carbon material one or more of metals belonging to Group 8 to Group 13 of the Periodic Table of Elements as additive metals, along with that, disposing side by side a supply port for water vapor, a supply port for protium gas, and a supply port for a flow gas that does not include water vapor along the circumferential direction of the rotation of the adsorbent material; supplying the water vapor to a portion of the adsorbent material and causing the water vapor to adsorb while passing through the adsorbent material; simultaneously supplying the protium gas to another portion of the adsorbent material to pass through the adsorbent material; and simultaneously supplying the flow gas to still another portion of the adsorbent material to pass through the adsorbent material, and desorbing and collecting the water vapor that has adsorbed to the adsorbent material.

A third aspect of the invention is a method for producing deuterium-depleted water by removing heavy water and semi-heavy water from water, the method including supplying a mixed gas of water vapor, protium gas, and a flow gas for a predetermined time period to an adsorbent material obtained by adding to a carbon material one or more of metals belonging to Group 8 to Group 13 of the Periodic Table of Elements as additive metals; causing the mixed gas to adsorb while passing through the adsorbent material; and desorbing and collecting the water vapor that has adsorbed to the adsorbent material.

A fourth aspect of the invention is such that the additive metals are one or more among Pt, Au, Ag, Rh, Pd, Cu, Zn, and Al.

A fifth invention is a method for producing deuterium-concentrated water by removing light water from water, the method including supplying water vapor for a predetermined time period to an adsorbent material obtained by adding to a carbon material one or more of metals belonging to Group 8 to Group 13 of the Periodic Table of Elements as additive metals; causing the water vapor to adsorb while passing through the adsorbent material; further bringing protium gas into contact with the adsorbent material, and then collecting the water vapor not adsorbed on the adsorbent material.

A sixth invention is a method for producing deuterium-concentrated water by removing light water from water, the method including rotating, in the circumferential direction, an adsorbent material obtained by adding to a carbon material one or more of metals belonging to Group 8 to Group 13 of the Periodic Table of Elements as additive metals; along with that, disposing side by side a supply port for water vapor and a supply port for a flow gas that does not include water vapor along the circumferential direction of the rotation of the adsorbent material; supplying a mixed gas including water vapor and protium gas to a portion of the adsorbent material and causing the mixed gas to adsorb while passing through the adsorbent material; and simultaneously supplying the flow gas to another portion of the adsorbent material to pass through the adsorbent material, and collecting the water vapor not adsorbed on the adsorbent material.

A seventh aspect of the invention is a method for producing deuterium-concentrated water by removing light water from water, the method including disposing supply ports for a mixed gas of water vapor, protium gas, and a flow gas at an adsorbent material obtained by adding to a carbon material one or more of metals belonging to Group 8 to Group 13 of the Periodic Table of Elements as additive metals; supplying the mixed gas for a predetermined time period to the adsorbent material and causing the mixed gas to adsorb while passing through the adsorbent material; and collecting the water vapor not adsorbed on and has passed through the adsorbent material.

An eighth aspect of the invention is such that the additive metals are one or more among Pt, Au, Ag, Rh, Pd, Cu, Zn, and Al.

### Advantageous Effects of Invention

According to the first aspect of the invention, it is possible to easily and efficiently obtain deuterium-depleted water and to maintain sanitary condition of the adsorbent material by supplying water vapor for a predetermined time period to an adsorbent material obtained by adding to a carbon material one or more of metals belonging to Group 8 to Group 13 of the Periodic Table of Elements as additive metals and causing the water vapor to adsorb while passing through the adsorbent material; subsequently bringing protium gas into contact with the adsorbent material; removing deuterium from the water vapor that has adsorbed to the adsorbent through a hydrogen-deuterium exchange reaction; and then desorbing and collecting the water vapor that has adsorbed to the adsorbent material.

According to the second aspect of the invention, it is possible to repeat adsorption and desorption of water vapor without interruption and to efficiently produce deuterium-depleted water by rotating, in the circumferential direction, an adsorbent material obtained by adding to a carbon material one or more of metals belonging to Group 8 to Group 13 of the Periodic Table of Elements as additive metals; along with that, disposing side by side a supply port for water vapor, a supply port for protium gas, and a supply port for a flow gas that does not include water vapor along the circumferential direction of the rotation of the adsorbent material; supplying the water vapor to a portion of the adsorbent material and causing the water vapor to adsorb while passing through the adsorbent material; simultaneously supplying the protium gas to another portion of the adsorbent material to pass through the adsorbent material and removing deuterium from the water vapor that has adsorbed to the adsorbent through a hydrogen-deuterium exchange reaction; and simultaneously supplying the flow gas to still another portion of the adsorbent material to pass through the adsorbent material, and desorbing and collecting the water vapor that has adsorbed to the adsorbent material.

According to the third aspect of the invention, it is possible to easily and efficiently obtain deuterium-depleted water and to maintain sanitary condition of the adsorbent material by supplying a mixed gas of water vapor, protium gas, and a flow gas for a predetermined time period to an adsorbent material obtained by adding to a carbon material one or more of metals belonging to Group 8 to Group 13 of the Periodic Table of Elements as additive metals; causing the mixed gas to adsorb while passing through the adsorbent material; removing deuterium from the water vapor that has adsorbed to the adsorbent through a hydrogen-deuterium exchange reaction; and desorbing and collecting the water vapor that has adsorbed to the adsorbent material.

According to the fourth aspect of the invention, it is possible to easily and efficiently obtain deuterium-depleted water and to maintain sanitary condition of the adsorbent material as the additive metals are one or more among Pt, Au, Ag, Rh, Pd, Cu, Zn, and Al.

According to the fifth aspect of the invention, it is possible to easily and efficiently obtain deuterium-concentrated water and to maintain sanitary condition of the adsorbent material by supplying water vapor for a predetermined time period to an adsorbent material obtained by adding to a carbon material one or more of metals belonging to Group 8 to Group 13 of the Periodic Table of Elements as additive metals; causing the water vapor to adsorb while passing through the adsorbent material; further bringing protium gas into contact with the adsorbent material; and then collecting the water vapor not adsorbed on the adsorbent material.

According to the sixth aspect of the invention, it is possible to repeat adsorption and desorption of water vapor without interruption, to efficiently produce deuterium-concentrated water and to maintain sanitary condition of the adsorbent material by rotating, in the circumferential direction, an adsorbent material obtained by adding to a carbon material one or more of metals belonging to Group 8 to Group 13 of the Periodic Table of Elements as additive metals; along with that, disposing side by side a supply port for water vapor and a supply port for a flow gas that does not include water vapor along the circumferential direction of the rotation of the adsorbent material; supplying a mixed gas including water vapor and protium gas to a portion of the adsorbent material and causing the mixed gas to adsorb while passing through the adsorbent material; and simultaneously supplying the flow gas to another portion of the adsorbent material to pass through the adsorbent material, and collecting the water vapor not adsorbed on the adsorbent material.

According to the seventh aspect of the invention, it is possible to maintain sanitary condition of the adsorbent material without lowering the deuterium concentration in the water vapor by supplying a mixed gas of water vapor, protium gas, and a flow gas for a predetermined time period to an adsorbent material obtained by adding to a carbon material one or more of metals belonging to Group 8 to Group 13 of the Periodic Table of Elements as additive metals; causing the mixed gas to adsorb while passing through the adsorbent material; causing the water vapor to adsorb to the adsorbent material; in parallel, removing deuterium from the water vapor that has adsorbed to the adsorbent through a hydrogen-deuterium exchange reaction; and collecting the water vapor not adsorbed on and has passed through the adsorbent material.

According to the eighth aspect of the invention, it is possible to easily and efficiently obtain deuterium-depleted water and to maintain sanitary condition of the adsorbent material as the additive metals are one or more among Pt, Au, Ag, Rh, Pd, Cu, Zn, and Al.

### Brief Description of Drawings

FIG. 1 is water vapor adsorption isotherms at 25°C of heavy water, semi-heavy water, and light water on activated carbon.
FIG. 2 is a diagram illustrating a measuring apparatus for measuring the adsorption rate and the desorption rate of light water and heavy water with respect to an adsorbent material.
FIG. 3 is a graph showing the adsorption rate of light water and heavy water with respect to an adsorption material.
FIG. 4 is an explanatory diagram illustrating a separation apparatus according to a first embodiment of the present invention.
FIG. 5 is an explanatory diagram illustrating a separation apparatus according to a second embodiment of the present invention, in which FIG. 5(a) is an overall view, FIG. 5(b) is a diagram as viewed from the inlet port for the adsorbent material, FIG 5(c) is a diagram as viewed from the outlet port for the adsorbent material, and FIG. 5(d) is also a diagram as viewed from the outlet port for the adsorbent material.
FIG. 6 is an explanatory diagram illustrating a test (Comparative Example) of the present invention, in which FIG 6(a) is a diagram as viewed from the inlet port side for water vapor and FIG. 6(b) is a diagram as viewed from the outlet port side for water vapor.
FIG. 7 is a table showing the deuterium concentration at every position obtained by the same test.
FIG. 8 is an explanatory diagram illustrating a test (Example) of the present invention, in which FIG. 8(a) is a diagram as viewed from the inlet port side for water vapor and FIG. 8(b) is a diagram as viewed from the outlet port side for water vapor.
FIG. 9 is a table showing the deuterium concentration at every position obtained by the same test.

### Description of Embodiments

Hereinafter, a method for producing deuterium-depleted water according to embodiments of the present invention will be described.

The present invention utilizes the fact that light water has a faster initial adsorption rate than heavy water and semi-heavy water on predetermined adsorption materials.

Furthermore, the present invention is to efficiently separate heavy water and semi-heavy water from light water by adding a predetermined metal to an adsorbent material.

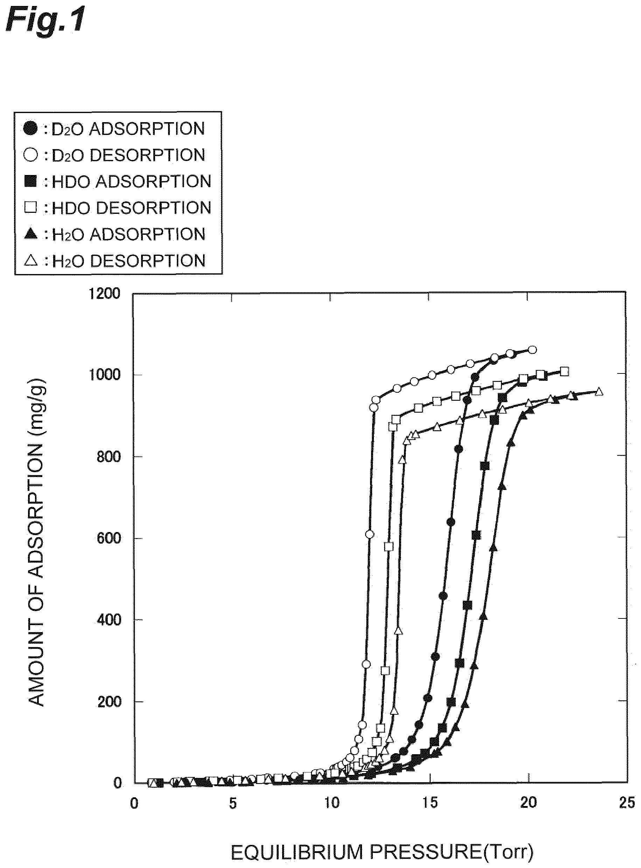

FIG. 1 is a graph showing water vapor adsorption isotherms at 25°C in the case of using activated carbon (activated carbon fibers "A-20" manufactured by AD'ALL Co., Ltd.) as the adsorbent material, the graphs shown in divided parts for heavy water, semi-heavy water, and light water.

As shown in FIG. 1, in all of heavy water, semi-heavy water, and light water, the amount of adsorption to activated carbon is changed greatly by a small change of pressure. Furthermore, all of heavy water, semi-heavy water, and light water exhibit hysteresis at the time of adsorption to activated carbon and at the time of desorption therefrom.

When the water vapor pressure is raised from low pressure, and water vapor is caused to adsorb to activated carbon, a large amount of heavy water adsorbs to the activated carbon at 14 to 17 Torr, a large amount of semi-heavy water adsorbs to the activated carbon at 15 to 18 Torr, and a large amount of light water adsorbs to the activated carbon at 16 to 19 Torr.

Furthermore, after water vapor is caused to sufficiently adsorb to activated carbon, when the water vapor pressure is lowered from high pressure, and water vapor is desorbed from the activated carbon, a large amount of light water desorbs from the activated carbon at 14 to 13 Torr, a large amount of semi-heavy water desorbs from the activated carbon at 13 to 12 Torr, and a large amount of heavy water desorbs from the activated carbon at 12 to 11 Torr.

### <Measurement of adsorption rate and desorption rate>

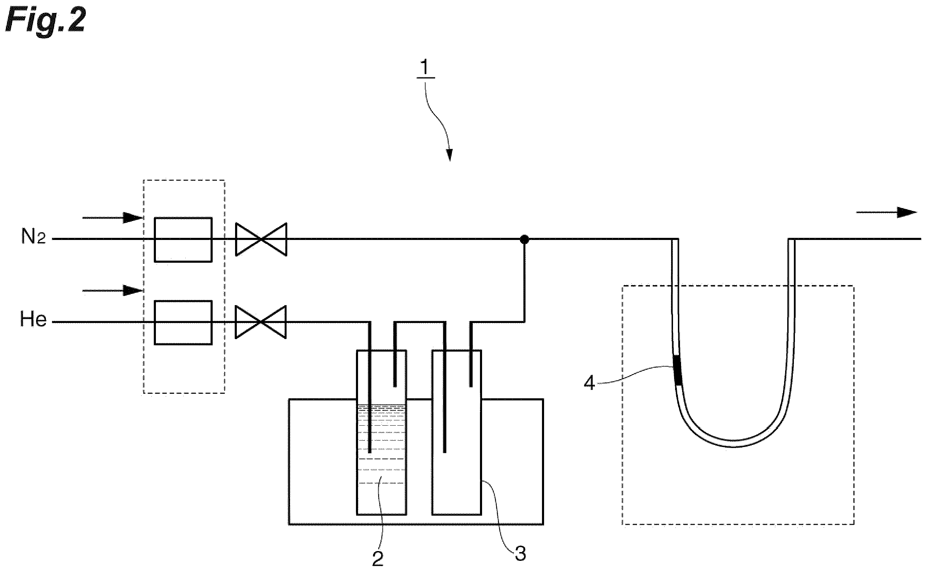

The adsorption rates and desorption rates of light water, heavy water, and semi-heavy water with respect to the adsorbent material were measured using the measuring apparatus illustrated in FIG. 2.

In this measuring apparatus 1, helium gas is used as a carrier for water vapor. Meanwhile, in the present embodiment, helium gas is used; however, as long as a gas capable of being used as a carrier for water vapor, the type of the carrier is not limited.

First, helium gas is released in water 2, and the gas that has risen up is collected. Next, a blank test tube 3 is passed through this helium gas, excess water droplets are trapped, and the gas is collected again.

Thereby, helium gas including water vapor can be obtained.

It is possible to control the humidity (relative pressure of water vapor) of the mixed gas by mixing the dry nitrogen gas to be supplied from another system with this helium gas.

By passing this mixed gas through a tube in which 35.5 mg of an adsorbent material 4 is disposed, and thereby changing the humidity of the mixed gas, the adsorption rates and the desorption rates of light water and heavy water with respect to the adsorbent material are measured. The rate of supply of the mixed gas is adjusted such that the sum of the helium gas including water vapor and the dry nitrogen gas is 50 ml/min. Furthermore, the whole measuring apparatus 1 is maintained at 15°C.

In the following description, an explanation will be given based on an example of using activated carbon (activated carbon fibers "A-20" manufactured by AD'ALL Co., Ltd.) as an adsorbent material.

First, in order to measure the adsorption rate, the mixing proportion of the mixed gas is adjusted, and thereby the mixed gas at a humidity of 40% is supplied to the adsorbent material 4 for a certain time period. Next, the mixed gas at a humidity of 90% is supplied to the adsorbent material 4, and from the changes in the amounts of light water and heavy water in the mixed gas that is collected at the downstream of the adsorbent material, the respective adsorption rates were measured.

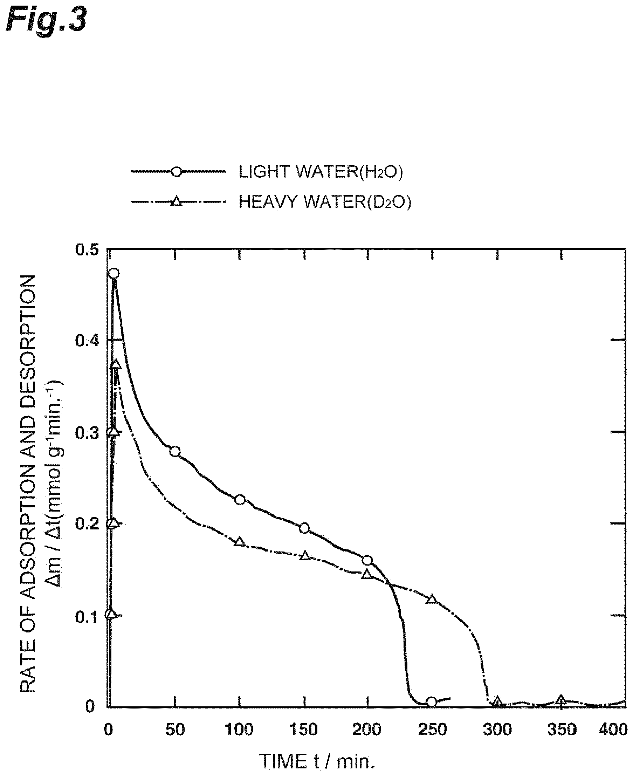

The graph of FIG. 3 shows the results.

As shown in FIG. 3, for about 10 minutes from the initiation (0 minute) of supply of the mixed gas at a humidity of 90%, the adsorption rate of light water is significantly fast and greatly surpasses the adsorption rate of heavy water.

Between the time points of 40 minutes and 220 minutes, the adsorption rate of light water is moderate and surpasses the adsorption rate of heavy water.

After 220 minutes, the adsorption rate of light water is rapidly decreased and falls below the adsorption rate of heavy water.

Light water reaches an equilibrium state approximately at 230 minutes, and heavy water reaches an equilibrium state approximately at 290 minutes.

Meanwhile, it is thought that the adsorption rate of semi-heavy water has a value obtained by averaging the values of light water and heavy water.

### <Adsorbent material>

The present invention is characterized by utilizing the fact that the initial adsorption rate of light water to an adsorbent material greatly surpasses the initial adsorption rates of heavy water and semi-heavy water, and using an adsorbent material obtained by adding a predetermined metal to a carbon material.

The adsorbent material has a rise in the adsorption isotherm, and when water vapor is supplied at a predetermined pressure or more, the adsorbent material needs to adsorb rapidly. It is preferable to use a material that is classified as type I, type II, type IV, or type V according to the IUPAC classification for the adsorption isotherm.

Furthermore, a material that cannot easily release adsorbed water vapor, that is, undergoes less irreversible adsorption, is preferred.

Examples of such an adsorbent material include carbon materials that contain simple substance of carbon as a main component, particularly activated carbon fibers (activated carbon fibers: A-20 manufactured by AD'ALL Co., Ltd.).

Regarding the metal to be added to the adsorbent material, metals corresponding to Group 8 to Group 13 of the Periodic Table of Elements, for example, one or more among Pt, Au, Ag, Rh, Pd, Cu, Zn, and Al can be used.

These metals can accelerate separation of heavy water and semi-heavy water from light water as will be described below, by decomposing a hydrogen molecule into two H (D) groups and also decomposing a water molecule into a H (D) group and an OH (OD) group, and thereby chemically adsorbing the groups to the surface.

Furthermore, since the above-mentioned metals do not have too strong adsorption performance, they do not cause irreversible adsorption and can cause the adsorbed water vapor to be desorbed relatively easily.

Moreover, by adding the above-mentioned metal to n adsorbent material, propagation of bacteria can be prevented by adding antibacterial action, and even if adsorption and desorption of water vapor and the like are repeated, the adsorbent material can be maintained sanitarily.

Furthermore, since the above-mentioned metals are not harmful metals that adversely affect the human body by being eluted into water, the light water or the heavy water and semi-heavy water separated by the present invention can be used for medical use or the like.

Among these metals, Pt and Pd are excellent in terms of the hydrogen-deuterium exchange reaction that will be described below, and Ag and Cu have excellent antibacterial performance.

For example, in order to add Pt into activated carbon, Pt is supported on particulate or fibrous activated carbon before being packed into the adsorbent material. Examples of the method for supporting Pt include a method of impregnating activated carbon with a Pt nanocolloidal solution and evaporating the solution to solid dryness, and a method of supporting Pt using an aqueous solution of chloroplatinic acid.

For example, activated carbon fibers A-20 are immersed in a 1 N nitric acid solution for 2 hours, and then the activated carbon fibers are taken out, washed with pure water, and dried. Next, the carbon fibers are immersed in an aqueous solution of chloroplatinic (IV) hydrochloride for one hour and stirred, and the carbon fibers are taken out, washed with pure water, and dried. Furthermore, the carbon fibers are treated for one hour under a hydrogen gas stream at normal temperature, and thus Pt-supported A-20 was obtained.

When common water vapor is supplied to an adsorbent material having Pt supported thereon as described above, light water having a high initial adsorption rate rapidly adsorbs and then is saturated, while heavy water and semi-heavy water slowly adsorb and then are saturated.

Furthermore, at the surface of Pt, light water molecules (H₂O), semi-heavy water molecules (HDO), and heavy water molecules (D₂O) are decomposed into a H group, an OH group, a D group, or an OD group, and these groups are chemically adsorbed.

In the following various embodiments, an adsorbent material having Pt supported on a carbon material was used.

### <First embodiment>

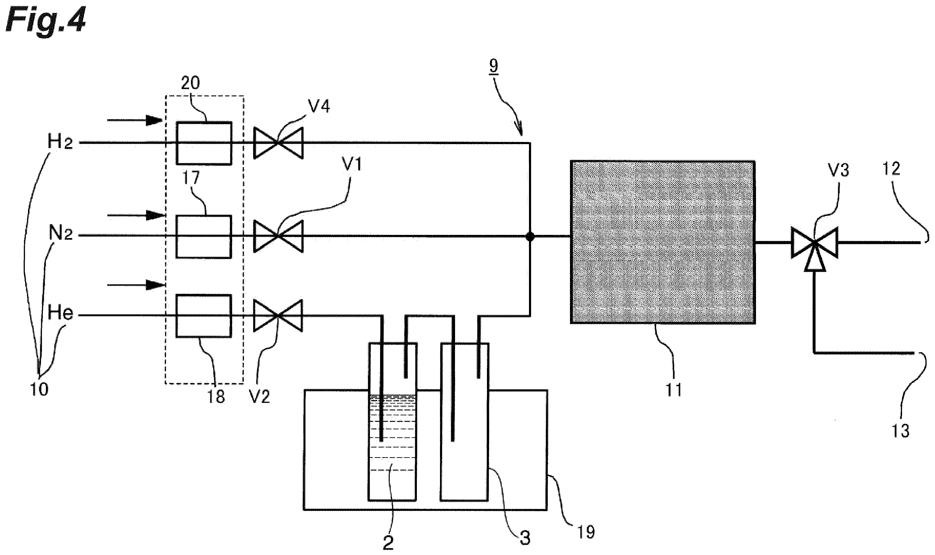

As illustrated in FIG. 4, a separation apparatus 9 of a first embodiment includes a supply apparatus 10 that can separately supply protium gas that is light hydrogen gas and a flow gas (nitrogen gas or helium gas), a water vapor generating apparatus 19 that supplies water vapor by passing water 2 and a blank test tube 3 through helium gas, an adsorption tank 11 that stores the adsorbent material disposed so as to allow water vapor or the flow gas to pass through, a deuterium-concentrated water outlet port 12, a deuterium-depleted water outlet port 13, mass flow controllers 17, 18, and 20 provided in the piping for nitrogen gas, the piping for helium gas, and the piping for protium gas, respectively, and valves V1, V2, V3, and V4.

According to the first embodiment, first, when valve V1 and valve V2 are opened, valve V3 is operated to open the deuterium-concentrated water outlet port 12, and water vapor and a flow gas are supplied from the supply apparatus 10 to the adsorption tank 11 at a flow rate of 50 mL/min using the flow controllers 17 and 18, light water rapidly adsorbs to the adsorbent material, and the deuterium concentration (concentration of heavy water and semi-heavy water) in the water vapor that has passed through the adsorbent material is increased. Therefore, deuterium-concentrated water containing plenty of deuterium can be collected from the deuterium-concentrated water outlet port 12.

Next, when valves V1 and V2 are closed, valve V3 is opened, and thereby protium gas (H₂) is supplied from the protium supply apparatus to the adsorption tank, protium is also decomposed into H and is separated and adsorbed to Pt. Therefore, a hydrogen-deuterium exchange reaction occurs between the D group and OD group originating from heavy water or semi-heavy water that have been separated and adsorbed to Pt, and protium gas. Thus, deuterium is released into hydrogen gas, and at the same time, protium adsorbed to Pt is increased. Therefore, consequently, the proportion of heavy water and semi-heavy water that have adsorbed is decreased, and the proportion of light water is increased.

As described above, since the initial adsorption rates of heavy water and semi-heavy water are slower than that of light water, and thereby heavy water and semi-heavy water are unevenly distributed in a region close to the surface of the adsorbent material, deuterium is effectively released into hydrogen gas by this hydrogen-deuterium exchange reaction.

Furthermore, when valves V2 and V4 are closed, valve VI is opened at the same time, valve V3 is operated to open the deuterium-depleted water outlet port 13, and a flow gas (nitrogen gas) is supplied from the supply apparatus 10 to the adsorption tank 11, water vapor having a low deuterium concentration that has adsorbed to the adsorbent material is desorbed and is carried by the flow gas. Therefore, deuterium-depleted water that almost does not contain deuterium can be collected through the deuterium-depleted water outlet port 13.

As described above, a process of supplying and adsorbing water vapor to the adsorbent material, a process of supplying protium gas and causing a hydrogen-deuterium exchange reaction, and a process of supplying a flow gas and desorbing water vapor are repeated sequentially.

The deuterium concentration of common water vapor supplied to the adsorption tank 11 is 150 ppm; however, in the first embodiment, deuterium-concentrated water having a deuterium concentration of 170 ppm and deuterium-depleted water having a deuterium concentration of 115 ppm could be collected.

According to the first embodiment, deuterium-depleted water and deuterium-concentrated water can be easily separated even without using an adsorbent material that exhibits adsorption hysteresis.

Furthermore, when water vapor is adsorbed on the adsorbent material, temperature increases, and subsequently, when a flow gas is supplied, water vapor can be easily desorbed. Furthermore, when water vapor is desorbed from the adsorbent material, temperature is decreased, and subsequently, when water vapor is supplied, water vapor can be easily adsorbed.

As described above, by alternately repeating a process of adsorbing water vapor on an adsorbent material and a process of desorbing water vapor, deuterium-concentrated water and deuterium-depleted water can be obtained continuously and efficiently.

Furthermore, by using an adsorbent material obtained by supporting a predetermined metal on a carbon material, and also accelerating a hydrogen-deuterium exchange reaction by supplying protium gas, deuterium that is unevenly distributed in a region close to the surface of the adsorbent material can be effectively removed, and deuterium-depleted water having a low deuterium concentration can be obtained.

Furthermore, by adding a predetermined metal to a carbon material, propagation of bacteria can be prevented by adding antibacterial action.

According to the first embodiment, water vapor and a flow gas were supplied to the adsorption tank 11, and then protium gas was supplied; however, instead, it is also acceptable to supply a mixed gas of water vapor, protium gas, and a flow gas to the adsorption tank 11.

In this case, light water rapidly adsorbs to the adsorbent material, and in parallel, a hydrogen-deuterium exchange reaction occurs between D groups and OD groups originating from heavy water or semi-heavy water that have been separated and adsorbed to Pt, and protium gas. Thus, the deuterium concentration of the adsorbed water vapor is decreased. The water vapor that has passed through the adsorbent material without adsorbing thereto, and hydrogen gas are collected through the deuterium-concentrated water outlet port 12. Meanwhile, since water vapor in which this deuterium concentration is high, and hydrogen gas can be easily separated by coalescing water vapor, deuterium-concentrated water can be obtained at the deuterium-concentrated water outlet port 12.

Subsequently, the water vapor that has adsorbed to the adsorbent material is desorbed by the flow gas, and deuterium-depleted water can be collected through the deuterium-depleted water outlet port 13.

### <Second embodiment>

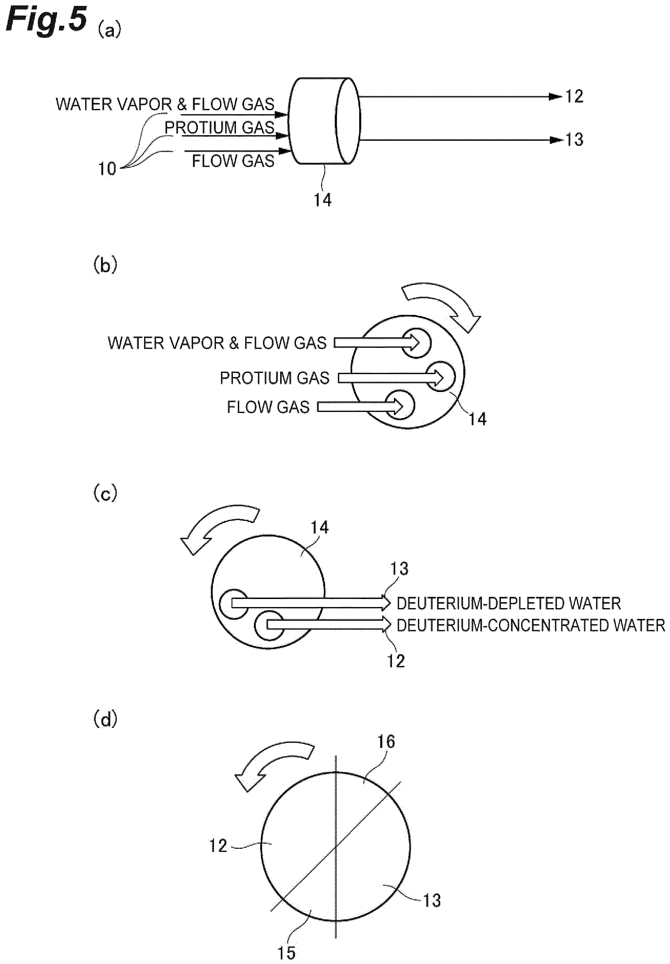

A second embodiment has a feature of using a rotating type adsorbent material 14 as illustrated in FIG. 5.

This separation apparatus 9 has a supply apparatus 10 capable of supplying water vapor, protium gas, and a flow gas (nitrogen gas or the like), an adsorbent material 14 disposed so as to allow water vapor or a flow gas to pass through and formed from the same material as in the case of the first embodiment, a deuterium-concentrated water outlet port 12, and a deuterium-depleted water outlet port 13.

The adsorbent material 14 is formed into a disc shape or a cylindrical shape, and flat faces are disposed to face the upstream direction and the downstream direction.

Furthermore, a route for supplying water vapor and a flow gas from the supply apparatus 10 to the adsorbent material 14, a route for supplying protium gas, and a route for supplying only a dry flow gas are separately provided, and the respective supply ports of these are disposed side by side along the circumferential direction of the adsorbent material 14. The supply ports for the mixed gas, protium, and the flow gas are fixed.

According to the second embodiment, while the adsorbent material 14 is rotated in the circumferential direction, a mixed gas of water vapor and a flow gas, protium gas, and a flow gas are supplied at the same time.

The flow rate of the mixed gas should be 50 ml/min, and the humidity should be 90%.

The speed of rotation of the adsorbent material 14 is set to 3 rph.

When water vapor is supplied to the adsorbent material 14, light water rapidly adsorbs, and the deuterium concentration in the water vapor that has passed through the adsorbent material increases. A deuterium-concentrated water outlet port 12 is provided at a position where this passed water vapor is released, and deuterium-concentrated water is collected.

Next, by the rotation of the adsorbent material 14, protium gas is supplied to the portion where water vapor has adsorbed, and a hydrogen-deuterium exchange reaction between deuterium and protium occurs in a region close to the surface of the adsorbent material 14. Thus, the deuterium concentration of the water vapor adsorbed to the adsorbent material 14 is decreased.

Thereafter, by the rotation of the adsorbent material 14, the flow gas is supplied to the portion where water vapor has adsorbed, and water vapor having a low deuterium concentration, which has adsorbed to the adsorbent material 14, is desorbed and carried by the flow gas. A deuterium-depleted water outlet port 13 is provided at a position where this water vapor is released, and deuterium-depleted water is collected.

Thereafter, through the rotation of the adsorbent material 14, at predetermined sites of the adsorbent material 14, adsorption of water vapor, a hydrogen-deuterium exchange reaction, and desorption of water vapor are repeated.

In the route for supplying only the flow gas, in order to accelerate desorption of water vapor from the adsorbent material, and in order to mitigate temperature decrease of the adsorbent material caused by the heat of vaporization, it is preferable to supply a flow gas at high temperature.

However, in the vicinity where the route for supplying only the flow gas is switched to the route for supplying a mixed gas including water vapor along the direction of rotation of the adsorbent material, it is preferable to cause a flow gas at low temperature to flow so as to cool the adsorbent material, and to make it easier for water vapor to adsorb.

That is, at one site of the adsorbent material, along the rotation, a mixed gas including water vapor, protium gas, a flow gas at high temperature, and a flow gas at low temperature are repeatedly supplied in turn.

As shown in FIG. 5(d), between the deuterium-concentrated water outlet port 12 and the deuterium-depleted water outlet port 13, it is preferable to provide an intermediate zone 15 where water vapor and hydrogen gas are discharged without being collected.

Furthermore, between the deuterium-depleted water outlet port 13 and the deuterium-concentrated water outlet port 12, it is preferable to provide an intermediate zone 16 where a flow gas that almost does not include water vapor is discharged.

The deuterium concentration of common water vapor that is supplied to the adsorbent material 14 is 150 ppm; however, according to the second embodiment, deuterium-concentrated water having a deuterium concentration of 170 ppm and deuterium-depleted water having a deuterium concentration of 115 ppm could be collected.

In the second embodiment as well, deuterium-depleted water and deuterium-concentrated water can be easily separated, even without using an adsorbent material that exhibits adsorption hysteresis.

Furthermore, when water vapor is adsorbed on the adsorbent material 14, temperature increases, and when a flow gas is supplied thereafter, water vapor can be easily desorbed. When water vapor is desorbed from the adsorbent material 14, temperature decreases, and when water vapor is supplied thereafter, water vapor can be easily adsorbed.

As described above, by alternately repeating a process of adsorbing water vapor to the adsorbent material 14 and a process of desorbing water vapor, deuterium-concentrated water and deuterium-depleted water can be obtained continuously.

Furthermore, by simultaneously supplying a mixed gas including water vapor and a flow gas to another portion of the rotating adsorbent material 14, adsorption and desorption of water vapor can be repeated in a simple manner, and deuterium-concentrated water and deuterium-depleted water can be efficiently produced.

If necessary, the deuterium-depleted water collected through the deuterium-depleted water outlet port 13 is repeatedly supplied to the same or separate adsorbent material, and deuterium-depleted water having a lower deuterium concentration can be obtained.

Furthermore, deuterium-concentrated water collected through the deuterium-concentrated water outlet port 12 is repeatedly supplied to the same or separate adsorbent material, and deuterium-concentrated water having a higher deuterium concentration can be obtained.

Furthermore, a humidifier that directly diffuses and releases water vapor that is collected from the deuterium-depleted water outlet port 13 can be produced by providing the separation apparatus of the second embodiment as illustrated in FIG. 5 inside.

This humidifier can supply water vapor having a low deuterium concentration.

Meanwhile, with regard to this humidifier, the water vapor collected from the deuterium-concentrated water outlet port 12 is condensed and stored in a predetermined container so that the water vapor can be discarded or utilized.

In the second embodiment, a supply port for water vapor and a flow gas and a supply port for protium gas are distinguished and are disposed side by side along the circumferential direction of the adsorbent material 14; however, instead, it is also acceptable to supply a mixed gas of water vapor, protium gas, and a flow gas to the adsorbent material 14 through a single supply port.

In this case, light water rapidly adsorbs to the adsorbent material 14, and in parallel, a hydrogen-deuterium exchange reaction occurs between D groups and OD groups originated from heavy water or semi-heavy water that has been separated and adsorbed to Pt and protium gas. Thus, the deuterium concentration of the adsorbed water vapor is decreased. Water vapor not absorbed and passed through the adsorbent material 14 and hydrogen gas are collected through the deuterium-concentrated water outlet port 12. Since this water vapor having a high deuterium concentration and the hydrogen gas can be easily separated by condensing the water vapor, deuterium-concentrated water can be obtained.

Thereafter, water vapor adsorbed on the adsorbent material 14 is desorbed by the flow gas through the rotation of the adsorbent material 14, and deuterium-depleted water can be collected through the deuterium-depleted water outlet port 13.

### <Modification Example>

Furthermore, as Modification Example of the second embodiment, liquid water may be supplied instead of supplying water vapor.

In this case, the supply port for water is disposed in the lower part of the adsorbent material 14, and the supply port for a dry flow gas is disposed in the upper part of the adsorbent material 14. Along with the rotation, a portion of the adsorbent material 14 is immersed in water for a predetermined time period and then is pulled up from water. Subsequently, as protium gas is passed through the adsorbent material, and then a dry flow gas is passed therethrough, first, liquid water present in the voids of the adsorbent material is removed, and at the same time, a hydrogen-deuterium exchange reaction is induced. Next, water vapor adsorbed to the water absorbent material is desorbed.

When the adsorbent material 14 is immersed in water, water vapor of light water rapidly adsorbs to the adsorbent material 14. Therefore, when protium gas is subsequently supplied, liquid water that is not involved in the adsorption to the voids of the adsorbent material is removed, and at the same time, deuterium is removed by a hydrogen-deuterium exchange reaction. When a dry flow gas is passed through next, the water vapor adhering to the flat surface of the adsorbent material is desorbed, and then water vapor having a low deuterium concentration, which is adhering to the adsorbent material, is desorbed.

Therefore, a discharge port is formed at a position where the water and water vapor at the voids or flat surface of the adsorbent material are discharged, and a deuterium-depleted water outlet port 13 is formed at a position where water vapor having a low deuterium concentration is discharged.

Meanwhile, the deuterium concentration of the water in the voids of the adsorbent material or the water vapor adhering to the outer surface (flat surface) hardly changes from 150 ppm.

### <Test>

In order to measure the effects of the present invention, a test was carried out.

First, activated carbon A-20 formed into a cylindrical shape was used as an adsorbent material as Comparative Example.

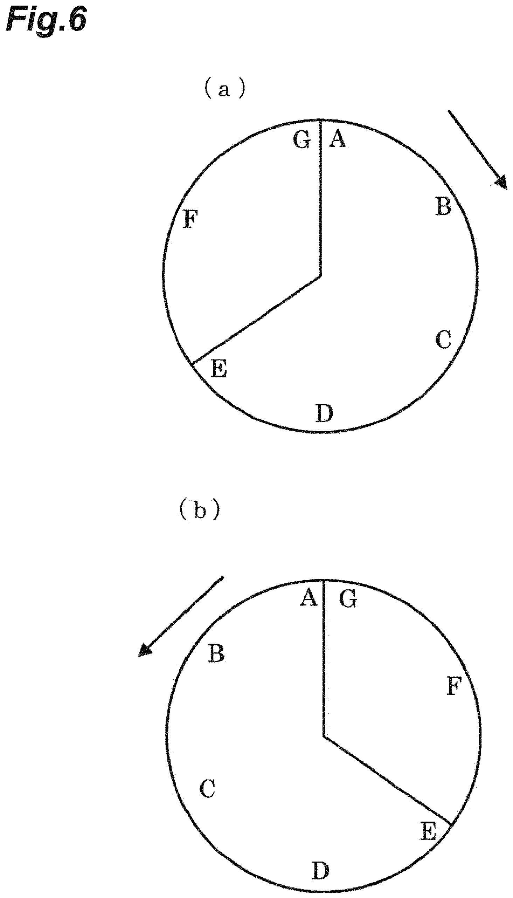

As illustrated in FIG. 6(a), to the range of 240 degrees in the surface on the inlet side of the adsorbent material, a mixed gas including water vapor was supplied, and to the range of the remaining 120 degrees, a dry flow gas was supplied. The supply ports for the mixed gas and the flow gas are fixed.

Positions on the circumference of the adsorbent material are distinguished by assigning symbols A, B, C, D, E, F, and G at almost every 60 degrees. Symbols A and G are almost adjacent. Since A to G are fixed positions, even if the adsorbent material rotates, it is considered that the positions do not move.

The adsorbent material is rotated in the circumferential direction at a speed of rotation of 0.5 rph.

As illustrated in FIG. 6, the direction of rotation of the adsorbent material is set such that a portion of the adsorbent material circulates in the order of A, B, C, D, E, F, G, and A.

From A to E, a mixed gas at a humidity of 90% of water vapor and a flow gas is supplied, at F, a dry flow gas at high temperature is supplied, and at G, a dry flow gas at low temperature is supplied.

The water vapor or flow gas that has flown into the adsorbent material at the positions A to G is discharged when the water vapor or the flow gas approaches exactly the same position as that for flowing in, along with the rotation of the adsorbent material.

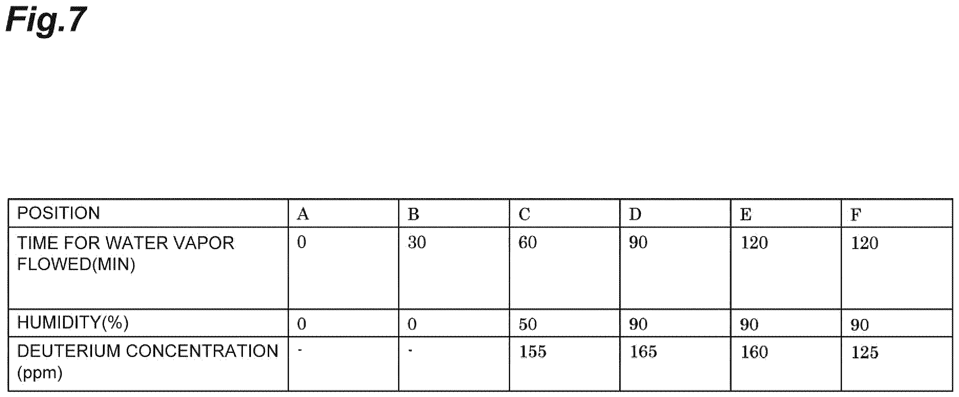

FIG. 7 is a table showing the relationship between the time lapse after the test is initiated, and the deuterium concentrations at various sites.

As in the case of A and B, up to about 40 minutes after water vapor flowed into a dry adsorbent material, the supplied water vapor was all adsorbed to the adsorbent material. Therefore, the humidity of the gas discharged through the outlet of the adsorbent material was 0%.

At C, D, and E, water vapor that was not adsorbed is discharged through the outlet. Since light water adsorbs selectively to the adsorbent material, the deuterium concentration of the discharged water vapor became 155 to 165 ppm, and deuterium-concentrated water could be obtained (deuterium-concentrated water outlet port).

At F, since the water vapor that had adsorbed to the adsorbent material is desorbed by the dry flow gas, the deuterium concentration of the water vapor thus discharged became 125 ppm, and deuterium-depleted water could be obtained (deuterium-depleted water outlet port).

Next, as Example, activated carbon A-20 formed into a cylindrical shape by adding Pt thereto was used.

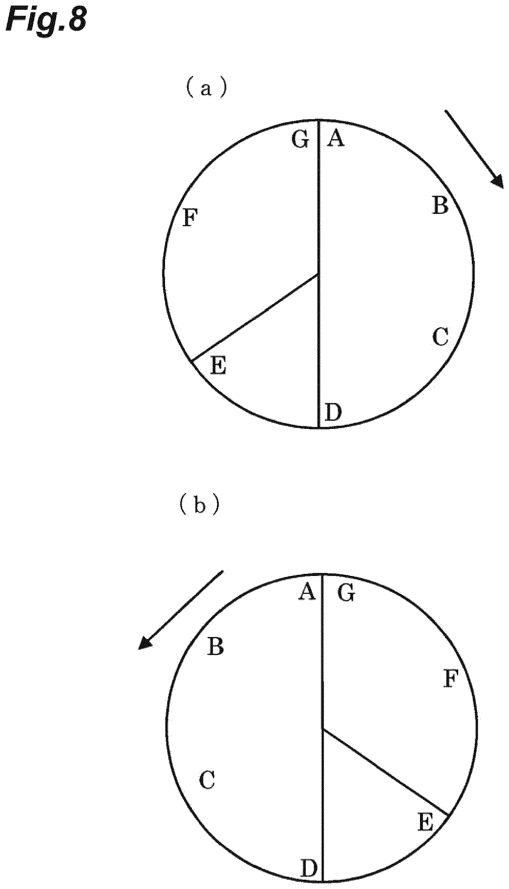

In the Example, as illustrated in FIG. 8(a), a mixed gas including water vapor was supplied to the range of 180 degrees in the surface on the inlet side of the adsorbent material, a mixed gas of water vapor and protium was supplied to the range of adjacent 60 degrees, and a dry flow gas was supplied to the range of remaining 120 degrees.

Conditions other than that were similar to Comparative Example.

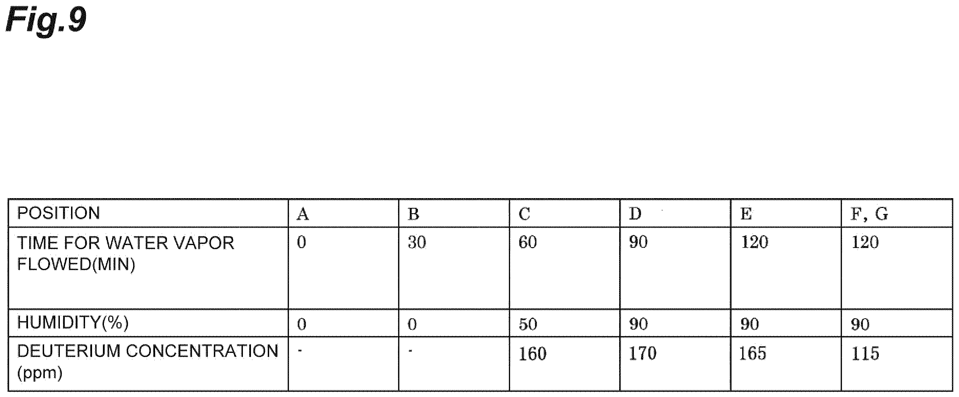

FIG. 9 is a table showing the relationship between the time lapse after the test is initiated, and the deuterium concentrations at various sites.

In this Example 1, at A and B, since supplied water vapor was all adsorbed to the adsorbent material, the humidity of the gas discharged through the outlet of the adsorbent material was 0%.

At C, D, and E, since light water adsorbs selectively to the adsorbent material, the deuterium concentration of the discharged water vapor became 160 to 170 ppm, and deuterium-concentrated water could be obtained (deuterium-concentrated water outlet port).

At F and G, since the water vapor that had adsorbed to the adsorbent material was desorbed by the dry flow gas, the deuterium concentration of the discharged water vapor became 115 ppm, and deuterium-depleted water could be obtained (deuterium-depleted water outlet port).

### Reference Signs List

1: measuring apparatus, 2: water, 3: test tube, 4: adsorbent material, 5: adsorbent material, 9: separation apparatus, 10: flow gas supply apparatus, 11: adsorption tank, 12: deuterium-concentrated water outlet port, 13: deuterium-depleted water outlet port, 14: adsorbent material, 15, 16: intermediate zone, 17, 18, 20: mass flow controller, 19: water vapor generating apparatus.

## Claims

1. A method for producing deuterium-depleted water by removing heavy water and semi-heavy water from water,
the method comprising:
supplying water vapor for a predetermined time period to an adsorbent material obtained by adding to a carbon material one or more of metals belonging to Group 8 to Group 13 of the Periodic Table of Elements as additive metals and causing the water vapor to adsorb while passing through the adsorbent material;
subsequently bringing protium gas into contact with the adsorbent material; and
then desorbing and collecting the water vapor that has adsorbed to the adsorbent material.

2. A method for producing deuterium-depleted water by removing heavy water and semi-heavy water from water,
the method comprising:
rotating, in the circumferential direction, an adsorbent material obtained by adding to a carbon material one or more of metals belonging to Group 8 to Group 13 of the Periodic Table of Elements as additive metals, along with that, disposing side by side a supply port for water vapor, a supply port for protium gas, and a supply port for a flow gas that does not include water vapor along the circumferential direction of the rotation of the adsorbent material;
supplying the water vapor to a portion of the adsorbent material and causing the water vapor to adsorb while passing through the adsorbent material;
simultaneously supplying the protium gas to another portion of the adsorbent material to pass through the adsorbent material; and
simultaneously supplying the flow gas to still another portion of the adsorbent material to pass through the adsorbent material, and desorbing and collecting the water vapor that has adsorbed to the adsorbent material.

3. A method for producing deuterium-depleted water by removing heavy water and semi-heavy water from water,
the method comprising:
supplying a mixed gas of water vapor, protium gas, and a flow gas for a predetermined time period to an adsorbent material obtained by adding to a carbon material one or more of metals belonging to Group 8 to Group 13 of the Periodic Table of Elements as additive metals; causing the mixed gas to adsorb while passing through the adsorbent material; and desorbing and collecting the water vapor that has adsorbed to the adsorbent material.

4. The method for producing deuterium-depleted water according to any one of claims 1 to 3, wherein the additive metals are one or more among Pt, Au, Ag, Rh, Pd, Cu, Zn, and Al.

5. A method for producing deuterium-concentrated water by removing light water from water,
the method comprising:
supplying water vapor for a predetermined time period to an adsorbent material obtained by adding to a carbon material one or more of metals belonging to Group 8 to Group 13 of the Periodic Table of Elements as additive metals; causing the water vapor to adsorb while passing through the adsorbent material; further bringing protium gas into contact with the adsorbent material; and then collecting the water vapor not adsorbed on the adsorbent material.

6. A method for producing deuterium-concentrated water by removing light water from water,
the method comprising:
rotating, in the circumferential direction, an adsorbent material obtained by adding to a carbon material one or more of metals belonging to Group 8 to Group 13 of the Periodic Table of Elements as additive metals, along with that, disposing side by side a supply port for water vapor and a supply port for a flow gas that does not include water vapor along the circumferential direction of the rotation of the adsorbent material;
supplying a mixed gas including water vapor and protium gas to a portion of the adsorbent material and causing the mixed gas to adsorb while passing through the adsorbent material; and
simultaneously supplying the flow gas to another portion of the adsorbent material to pass through the adsorbent material, and collecting the water vapor not adsorbed on the adsorbent material.

7. A method for producing deuterium-concentrated water by removing light water from water,
the method comprising:
supplying a mixed gas of water vapor, protium gas, and a flow gas for a predetermined time period to an adsorbent material obtained by adding to a carbon material one or more of metals belonging to Group 8 to Group 13 of the Periodic Table of Elements as additive metals; causing the mixed gas to adsorb while passing through the adsorbent material; and collecting the water vapor not adsorbed on and passed through the adsorbent material.

8. The method for producing deuterium-concentrated water according to any one of claims 5 to 7, wherein the additive metals are one or more among Pt, Au, Ag, Rh, Pd, Cu, Zn, and Al.
